# EUROPEAN PATENT SPECIFICATION

(11) **EP 4 148 308 B1**
(45) Date of publication and mention of the grant of the patent: **13.03.2024**
(21) Application number: 22719194.7
(22) Date of filing: 25.01.2022
(51) Int. Cl.: F16K 11/18, F16K 31/11, F16K 31/44, F16K 35/02, F24C 3/12

(54) **GAS VALVE AND HOB**
GASVENTIL UND KOCHFELD
ROBINET DE GAZ ET TABLE DE CUISSON

(30) Priority: 26.07.2021 CN 202110844513
(43) Date of publication of application: 15.03.2023
(73) Proprietor: Wuhu Midea Smart Kitchen Appliance Manufacturing Co., Ltd., Wuhu, Anhui 241000 (CN)
(72) Inventor: QI, Zhengsheng, Wuhu, Anhui 241000 (CN)
(74) Representative: RGTH
(86) International application number: PCT/CN2022/073835
(87) International publication number: WO 2023/005175

(56) References cited:
- CN-A- 102 588 665
- CN-A- 110 953 364
- CN-U- 204 878 811
- CN-U- 209 354 685
- CN-U- 210 106 641
- CN-U- 215 673 737
- CN-U- 215 673 738
- CN-U- 215 673 739
- CN-U- 215 673 740
- GB-A- 2 284 648
- JP-A- H11 257 666
- KR-B1- 100 829 079

## Description

### CROSS-REFERENCES TO RELATED APPLICATIONS

This patent claims priority to Chinese Patent Application No. 202110844513.0, filed on July 26, 2021, and titled "GAS VALVE AND STOVE".

### FIELD

The present disclosure relates to the technical field of gas devices, and in particular, to a gas valve and a stove including the gas valve.

### BACKGROUND

A gas valve is a core component of a household gas stove, and mainly plays a role in sealing, adjustment of the gas firepower, and ignition. In addition, the user may perceive handfeel of the gas valve. The quality of the gas valve determines the quality of the stove.

A working principle of the gas valve is that an upper end of the gas valve is provided with a valve rod that can rotate synchronously with a knob. The valve rod has a pin that fits with a valve seat and a valve core through snap grooves, and the fitting with the valve seat forms a child lock function, that is, the gas valve, in a closed state, must be pressed down to unlock the child lock for rotation to open the valve; the fitting with the valve core drives the valve core to rotate around a shaft core. The valve core has an outer ring air passage and an inner ring air passage provided thereon, and the valve body has an outer ring air hole and an inner ring air hole provided thereon. An output gas flow is controlled by changing an overlapping area of the air passage on the valve core and the air hole on the valve body, thereby controlling the change of the firepower of the stove.

In the related art, a total stroke of the valve rod is about 3.5mm, and a stroke for unlocking the child lock is about 1mm. In actual use, the valve rod only needs to be pressed down by 1mm or more to unlock the child lock and rotate to adjust the valve core, but at this time, the valve rod has not actually triggered the gas valve gate, and stable gas supply cannot be achieved, resulting in flameout once the hand is released, and the gas stove cannot be used normally. Each of GB 2 284 648 A and JP 11- 257666 A discloses a gas valve with a rotatable valve core.

### SUMMARY

One purpose of the present invention is to propose a gas valve in which a driving structure of a gas valve gate is separated from a driving structure of a valve core, which is convenient for use.

Another purpose of the present invention is to provide a stove, which includes the above-mentioned gas stove.

A gas valve according to the present invention includes: a housing, a valve core, a valve rod, and a positioning block. The valve core is rotatably arranged in the housing to adjust an opening degree. The valve rod is rotatable along a circumferential direction, movably connected to the housing along an axial direction, and triggering a gas valve gate. The positioning block is arranged in the housing and has a locking position and an unlocking position along the axial direction. The positioning block is locked when at the locking position, and is rotatable and drives the valve core when at the unlocking position. The positioning block and the valve rod are movable relative to each other along the axial direction and are fixed relative to each other along the circumferential direction, and the positioning block is driven by the valve rod.

According to the gas valve of the embodiments of the present invention a driving structure for the gas valve gate is separated from a driving structure for the valve core, which is convenient for use.

In addition, the gas valve according to the above embodiments of the present invention may further have the following additional technical features.

Optionally, the valve rod has an initial position, a triggering position, and a rotating position along the axial direction, the valve rod triggers the gas valve gate when at the triggering position and drives the positioning block to move to the unlocking position when at the rotating position, and a stroke C of the valve rod moving from the initial position to the triggering position is shorter than or equal to a stroke B of the valve rod moving to the rotating position.

Optionally, the valve rod has an abutting structure driving the positioning block, and when the valve rod is at the initial position, the abutting structure and the positioning block have a gap E therebetween, and the stroke B of the valve rod is equal to a sum of the gap E and an unlocking stroke D of the positioning block, and the unlocking stroke D of the positioning block is a stroke of the positioning block moving from the locking position to the unlocking position.

Optionally, the gas valve further includes an ignition switch connected to the housing, and the valve rod triggers the ignition switch within the stroke B.

Optionally, the valve rod has an annular groove provided on a peripheral surface of the valve rod, and the ignition switch has a triggering portion extending into the annular groove and being triggered by an end surface of the annular groove.

Optionally, the housing includes a valve seat, the valve seat has a mounting hole defined therein, the mounting hole has a slide groove provided on an inner peripheral surface of an end of the mounting hole, a child lock groove is provided on a bottom surface of the slide groove, the valve rod is inserted in the mounting hole, the positioning block includes a main body portion and a positioning boss connected to the main body portion, the positioning boss is embedded in the child lock groove when the positioning block is at the locking position, and the positioning boss slides along the slide groove when the positioning block is at the unlocking position.

Optionally, the mounting hole includes a first hole section, a second hole section having a greater radial dimension than the first hole section, and a third hole section having a greater radial dimension than the second hole section, the first hole section and the second hole section have a first stepped surface provided therebetween, the second hole section and the third hole section have a second stepped surface provided therebetween, an end of the valve rod has a flange and is stopped by the first stepped surface, and the positioning block is movably arranged on the third hole section along the axial direction and is stopped by the second stepped surface.

Optionally, an end portion of the valve rod extends out of the mounting hole, and has a limiting stop ring limits an axial stroke of the valve rod.

Optionally, either an end surface of the valve rod or the positioning block is provided with an embedding block, the other one of the end surface of the valve rod and the positioning block is provided with an embedding hole, and the embedding block is movably embedded into the embedding hole along the axial direction such that the valve rod drives the positioning block to rotate.

Optionally, the gas valve further includes a valve needle extending along the axial direction and having an end abuts against the valve rod, and the valve needle triggers the gas valve gate.

Optionally, the valve needle penetrates through the valve core and the positioning block along the axial direction.

Optionally, the gas valve further includes a reset structure resets the valve rod to the initial position and reset the positioning block to the locking position.

Optionally, the reset structure includes a first spring and a second spring, the first spring has two ends abutting against the valve core and the positioning block respectively, the second spring has two ends abutting against the valve core and the valve rod respectively, and the first spring and the second spring are of an inner and outer nested structure.

A stove according to embodiments of the present invention includes the above gas valve.

### BRIEF DESCRIPTION OF DRAWINGS

FIG. 1 is a schematic diagram of a gas valve according to an embodiment of the present invention.
FIG. 2 is a schematic diagram of a section taken along line P1-P1 in FIG. 1.
FIG. 3 is a schematic diagram of a section taken along line P2-P2 in FIG. 1.
FIG. 4 is a schematic diagram of a section taken along line P3-P3 in FIG. 1.
FIG. 5 is a schematic diagram of a gas valve viewed in another direction according to an embodiment of the present invention.
FIG. 6 is a schematic diagram of a gas valve viewed in yet another direction according to an embodiment of the present invention.
FIG. 7 is a partial schematic diagram of a gas valve according to an embodiment of the present invention.
FIG. 8 is a partial schematic diagram of a gas valve according to an embodiment of the present invention.
FIG. 9 is a cross-sectional view of a gas valve according to an embodiment of the present invention.
FIG. 10 is a cross-sectional view of a gas valve according to an embodiment of the present invention.
FIG. 11 is a schematic diagram of a valve seat of a gas valve according to an embodiment of the present invention.
FIG. 12 is a schematic diagram of a valve seat of a gas valve according to an embodiment of the present invention.
FIG. 13 is a cross-sectional view of a valve seat of a gas valve according to an embodiment of the present invention.
FIG. 14 is a schematic diagram of a valve rod of a gas valve according to an embodiment of the present invention.
FIG. 15 is a schematic diagram of a valve rod of a gas valve according to an embodiment of the present invention.
FIG. 16 is a schematic diagram of a valve rod of a gas valve according to an embodiment of the present invention.
FIG. 17 is a schematic diagram of a positioning block of a gas valve according to an embodiment of the present invention.
FIG. 18 is a cross-sectional view of a positioning block of a gas valve according to an embodiment of the present invention.
FIG. 19 is a schematic diagram of a positioning block of a gas valve according to an embodiment of the present invention.
FIG. 20 is a schematic diagram of a positioning block of a gas valve according to an embodiment of the present invention.
FIG. 21 is a schematic diagram of a gas valve gate transmission structure of a gas valve according to an embodiment of the present invention.
FIG. 22 is a schematic diagram of a gas valve gate transmission structure of a gas valve according to an embodiment of the present invention.
FIG. 23 is a schematic diagram of a gas valve gate transmission structure of a gas valve according to an embodiment of the present invention.
FIG. 24 is an exploded schematic diagram of a gas valve gate transmission structure of a gas valve according to an embodiment of the present invention.

Reference numerals: gas valve 100, housing 10, valve seat 11, valve body 12, bottom cover 13, microswitch 14, mounting hole 101, slide groove 102, child lock groove 103, first stepped surface 104, second stepped surface 105, valve core 20, valve rod 30, embedding block 31, annular groove 301, limiting stop ring 32, flat gasket 33, flange 34, first spring 35, second spring 36, positioning block 40, main body portion 41, positioning boss 42, embedding hole 401, valve needle 50, lever 61, down-pressing end 62, top hook end 63, transmission pin 64, third spring 65, gas valve gate 70, push rod 71.

### DESCRIPTION OF EMBODIMENTS

The China national standard stipulates that the gas valve must have the flameout protection function, and the principle thereof is that: the gas valve is manufactured by using different thermoelectric potentials generated by different alloy materials under a temperature, and makes use of the potential difference of the different alloy materials. Therefore, the thermocouple is also a thermal sensor, which converts a thermal signal into a thermoelectromotive force. The use of the thermocouple as a thermal sensor on the gas stove for flameout safety protection is also designed according to such principle and characteristics of the thermocouple.

The principle of this kind of safety protection apparatuses is that when the thermocouple generates a thermoelectric potential when heated by the flame, a current is generated when the thermoelectric potential passes through the circuit of the gas valve gate connected to the thermocouple, and the generated current excites a magnet of the gas valve gate to generate magnetism, thereby completing the opening of the gas valve gate.

It is relatively simple to implement this kind of safety protection apparatuses on the gas stove. Specifically, a gas valve gate is fixed in a plug valve of a gas stove to control a gas passage, a thermocouple is fixed near a burner of the gas stove, and a lead wire of the thermocouple is in winding connection with the gas valve gate. When the safety protection apparatus needs to work, the plug valve is pressed and rotated, and when the plug valve is pressed, an ejector pin in the plug valve pushes the gas valve gate open through a lever. When the gas is released to the burner, it is ignited by ignition sparks; but due to the inertial effect of the thermocouple, after the gas is ignited, it is still necessary to press the plug valve to keep the gas valve gate in an open state, and wait until the thermoelectromotive force generated by the heated thermocouple is sufficient to maintain an opened state of the gas valve gate before releasing the plug valve and maintaining the normal operation of the gas stove. A pressing duration is about 3S to 5S (single-coil gas valve gate). When unexpected flameout of the gas stove occurs during normal operation, the thermocouple is slowly cooled down due to no flame heating, and the thermoelectric potential also slowly decreases until it disappears. The gas valve gate loses its magnetism due to no excitation current and resets under the action of the spring force, thereby closing the gas passage and preventing the gas from leaking out to achieve the function of safety protection.

A double-coil gas valve gate has a new auxiliary winding coil added to the original single-coil gas valve gate. When the valve rod is pressed down, a battery supplies power to the auxiliary coil to realize the opening of the gas valve gate, achieving the effect of zero-second start-up.

In view of the above, because the gas valve gate contains dynamic and static iron cores, the dynamic and static iron cores must be completely attached to each other on the basis of satisfying the valve opening current to be able to open the valve and open the gas passage.

Because a triggering stroke of the gas valve gate is different from an unlocking stroke of the child lock, the gas valve gate has not actually been opened after the ignition is completed, which may cause ignition when the valve rod is pressed and flameout when the valve rod is released, affecting the use of the user. In the related art, the gas valve gate structure only lengthens the stroke of the child lock on the original integrated valve rod. Firstly, the volume of the valve body is increased. Secondly, when the child lock is unlocked and the valve is opened, the valve rod moves down by a distance of the stroke of the child lock, a top hook end of the lever abuts against a push rod end of the gas valve gate, and the push rod is in a stressed state. When encountering an accidental flameout at this time, the push rod of the gas valve gate will not be able to reset normally, and a head gasket will not be able to implement effective sealing, resulting in air leakage.

To this end, the present invention provides a gas valve 100.

The embodiments of the present invention will be described in detail below, and examples thereof are as illustrated in the accompanying drawings, throughout which same or similar elements, or elements having same or similar functions, are denoted by same or similar reference numerals. The embodiments described below with reference to the drawings are illustrative, and are intended to explain rather than limit the present invention.

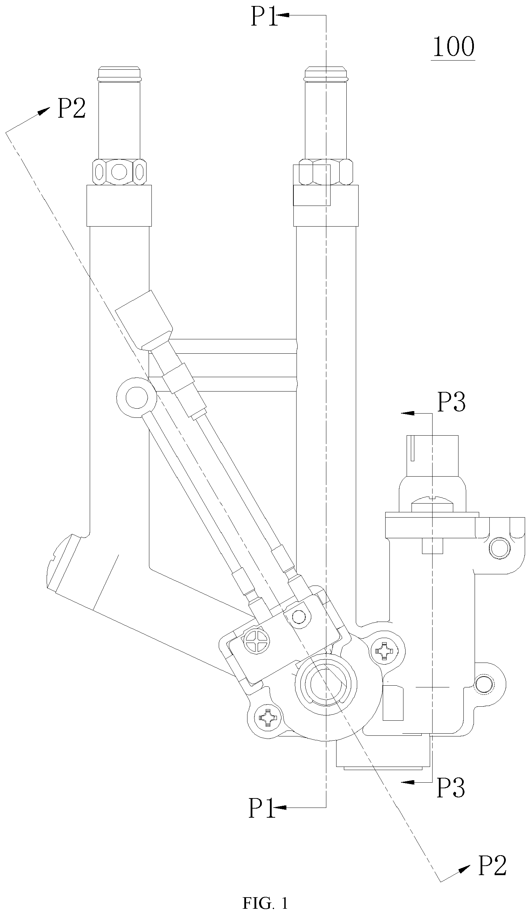

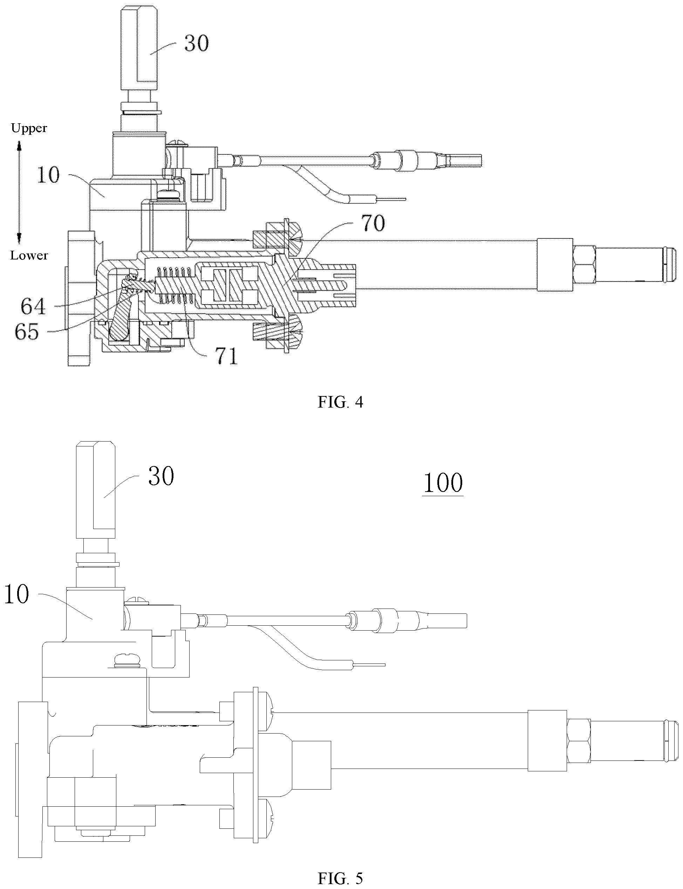

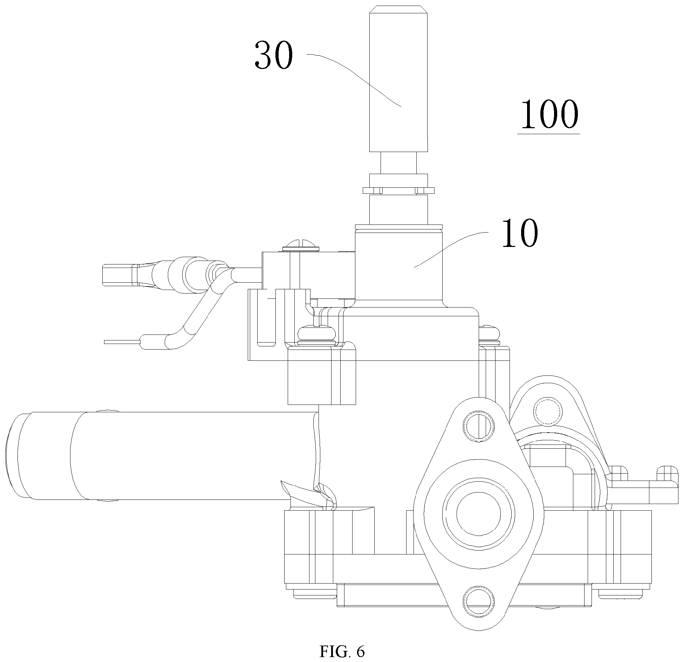

As shown in FIG. 1 to FIG. 6, the gas valve 100 according to the embodiments of the present invention includes: a housing 10, a valve core 20, a valve rod 30, and a positioning block 40.

The valve core 20 is rotatably arranged in the housing 10 to adjust an opening degree. The valve rod 30 is rotatable along a circumferential direction, movably connected to the housing 10 along an axial direction, and configured to trigger a gas valve gate 70. The positioning block 40 is arranged in the housing 10, and has a locking position and an unlocking position along the axial direction. The positioning block 40 is locked when at the locking position, and is rotatable and adapted to drive the valve core 20 when at the unlocking position, the positioning block 40 and the valve rod 30 are movable relative to each other along the axial direction and are fixed relative to each other along the circumferential direction, and the positioning block 40 is adapted to be driven by the valve rod 30.

Specifically, the housing 10 may have an outer ring air hole and an inner ring air hole defined thereon, the valve core 20 may have an outer ring air passage and an inner ring air passage defined thereon. By rotating the valve core 20, an overlapping area of the air passage on the valve core 20 and the air hole on the valve body 12 is adjusted, so as to realize the adjustment of the gas flow to control the firepower of the stove. In addition, whether to supply gas can be controlled by the gas valve gate 70, in which the gas valve gate 70 is controlled by the valve rod 30, and the opening degree of the gas valve 100, the valve core 20, etc. are controlled by the positioning block 40, and because the positioning block 40 and the valve rod 30 are separated, the stroke of the positioning block 40 and the stroke of the valve rod 30 can be different, so as to satisfy the shorter stroke of the positioning block 40 for unlocking the child lock and the larger stroke for opening the gas valve gate 70 at the same time, satisfy different stroke requirements during use, and facilitate the use of the gas valve 100.

According to the gas valve 100 of the embodiments of the present invention, the driving structure of the gas valve gate 70 is separated from the driving structure of the valve core 20, so as to satisfy different requirements for unlocking the child lock, rotating the valve core 20, and opening the gas valve gate 70, avoid the problem of flameout after the valve rod 30 is released, and facilitate use.

In order to further avoid the problem of flameout once the hand is released, in the process of pressing the valve rod 30, the gas valve gate 70 can be triggered first, and then the child lock can be unlocked, so as to avoid the problem of flameout once the valve rod 30 is released. Of course, based on the actual situation, other timings may be used to open the gas valve gate 70 and unlock the child lock. The present disclosure is mainly described with a case where the gas valve gate 70 is opened first and then the child lock is unlocked, which is not intended to limit the protection scope of the present invention.

In some embodiments of the present invention, the valve rod 30 has an initial position, a triggering position and a rotating position along the axial direction. The valve rod 30 triggers the gas valve gate 70 when at the triggering position and drives the positioning block 40 to move to the unlocking position when in the rotating position, and a stroke C of the valve rod 30 moving from the initial position to the triggering position is shorter than or equal to a stroke B of the valve rod 30 moving to the rotating position. That is, in a process of pressing the valve rod 30 down, the gas valve gate 70 is opened first and then the child lock is unlocked, or the opening of the gas valve gate 70 and the unlocking of the child lock are performed simultaneously. Of course, it is preferable to use the solution of first opening the gas valve gate 70 and then unlocking the child lock.

Specifically, during use, the valve rod 30 is pressed down, and the gas valve gate 70 will be triggered during the pressing process of the valve rod 30. At this time, the gas valve gate 70 is opened, the ignition is completed, then the child lock is unlocked (that is, the positioning block 40 moves to the unlocking position), the valve rod 30 can be rotated, and the motive force can be transmitted to the valve core 20 through the positioning block 40 to realize the rotation of the valve core 20 to adjust the opening degree, so as to avoid the problem of flameout once the valve rod 30 is released.

In addition, a total pressing stroke of the valve rod 30 is set as A, the stroke for unlocking the child lock is B (from the start of pressing the valve rod 30 until the valve rod 30 drives the positioning block 40 to the unlocking position), and the opening stroke of the gas valve gate 70 is C. A≥B>C is set to ensure that the valve is opened immediately after the child lock is unlocked.

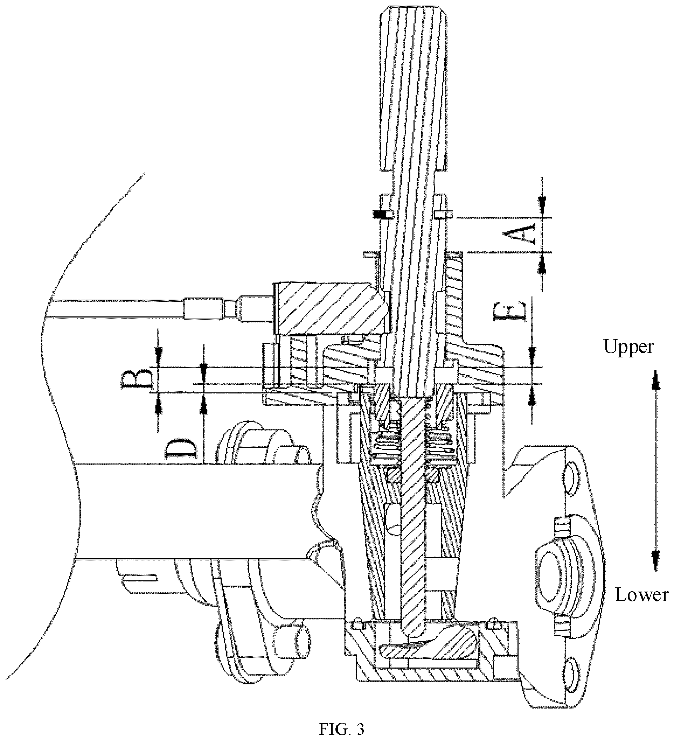

As shown in FIG. 3, optionally, the valve rod 30 has an abutting structure configured to drive the positioning block 40, and when the valve rod 30 is in the initial position, the abutting structure and the positioning block 40 have a gap E therebetween. The stroke B of the valve rod 30 is equal to a sum of the gap E and an unlocking stroke D of the positioning block 40, and the unlocking stroke D of the positioning block 40 is a stroke of the positioning block 40 moving from the locking position to the unlocking position. In this way, without changing the existing child lock structure, the gas valve gate 70 can be opened before the child lock is unlocked, so as to prevent the unlocking stroke D from being too large to affect the use.

As shown in FIGS. 1 to 6, in some embodiments of the present invention, the gas valve 100 further includes an ignition switch, the ignition switch is connected to the housing 10, and the valve rod 30 is configured to trigger the ignition switch within the stroke B. That is, in the process of pressing the valve rod 30, the ignition is completed before the child lock is unlocked, so as to achieve stable ignition and avoid the problem of flameout caused by releasing the valve rod 30 before the ignition is completed.

Of course, other external ignition apparatuses can also be used to achieve ignition in the present invention.

Optionally, the valve rod 30 has an annular groove 301 provided on a peripheral surface thereof, and the ignition switch has a triggering portion which extends into the annular groove 301 and is adapted to be triggered by an end surface of the annular groove 301, so as to improve the efficiency and success rate of ignition, and improve the operation stability of the gas valve 100.

Of course, the annular groove 301 on the valve rod 30 in the present invention may be a complete annular structure, or may be a superior arc or inferior arc annular structure.

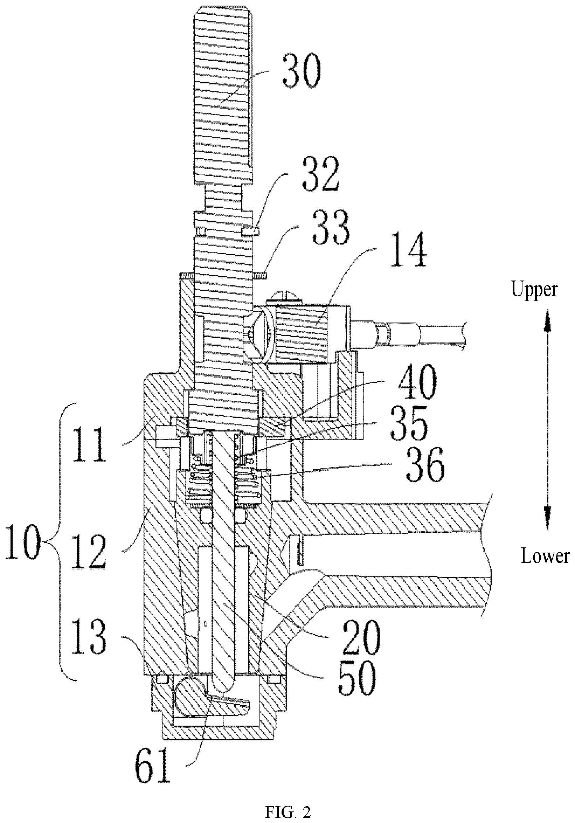

In conjunction with FIG. 2 and FIGS. 11 to 13, in some embodiments of the present invention, the housing 10 includes a valve seat 11. The valve seat 11 has a mounting hole defined therein. The mounting hole 101 has a slide groove 102 provided on an inner peripheral surface of one end thereof, and the slide groove 102 has a child lock groove 103 provided on a bottom surface thereof. The valve rod 30 is inserted in the mounting hole 101, the positioning block 40 includes a main body portion 41 and a positioning boss 42 connected to the main body portion 41, the positioning boss 42 is embedded in the child lock groove 103 when the positioning block 40 is at the locking position, and the positioning boss 42 is adapted to slide along the slide groove 102 when the positioning block 40 is at the unlocking position. During use, through the cooperation of the valve rod 30 and the mounting hole 101, the circumferential rotation and axial movement of the valve rod 30 can be implemented, which facilitates the driving of the valve rod 30.

Of course, in the present invention, the positioning block 40 may have an avoidance groove provided thereon and the valve seat 11 may have a convex portion provided thereon. In this way, at the locking position, the circumferential rotation of the positioning block 40 can be limited by the cooperation of the avoidance groove and the convex portion; and at the unlocking position, the rotation of the positioning block 40 is facilitated by releasing the avoidance groove from the limiting of the convex portion. It is also possible to switch the positioning block 40 between the locking position and the unlocking position. Of course, the above descriptions of the present invention are only some specific embodiments of the present invention, and are not intended to limit the protection scope of the present invention.

Optionally, the mounting hole 101 includes a first hole section, a second hole section having a greater radial dimension than the first hole section, and a third hole section having a greater radial dimension than the second hole section, the first hole section and the second hole section have a first stepped surface 104 provided therebetween, and the second hole section and the third hole section have a second stepped surface 105 provided therebetween. One end of the valve rod 30 has a flange 34 and is stopped by the first stepped surface 104, the positioning block 40 is movably arranged on the third hole section along the axial direction and is stopped by the second stepped surface 105. Through the cooperation between the first stepped surface 104 and the flange 34, the valve rod 30 can be stopped to prevent the valve rod 30 from escaping from the mounting hole 101. In addition, in combination with the above embodiments, when the flange 34 abuts against the first stepped surface 104, the valve rod 30 is in the initial position. In addition, through the cooperation between the second stepped surface 105 and the positioning block 40, the position of the positioning block 40 can be stabilized, so as to facilitate the driving of the positioning block 40 by the valve rod 30 and improve the stability of the gas valve 100.

As shown in FIG. 2, in some embodiments of the present invention, an end portion of the valve rod 30 extends out of the mounting hole 101 and is provided with a limiting stop ring 32, and the limiting stop ring 32 is configured to limit an axial stroke of the valve rod 30. The limiting stop ring 32 can be an opening stop ring or other structures. By setting the limiting stop ring 32, a maximum stroke of the valve rod 30 can be controlled, so as to avoid the excessive axial movement of the valve rod 30 affecting the stability of the gas valve 100 (for example, impact on the gas valve gate 70 can be avoided).

In addition, in combination with the above embodiments, through the cooperation of the flange 34 and the limiting stop ring 32, the strokes for down-pressing and up-lifting the valve rod 30 can be controlled, and the stability of the axial movement of the valve rod 30 can be improved.

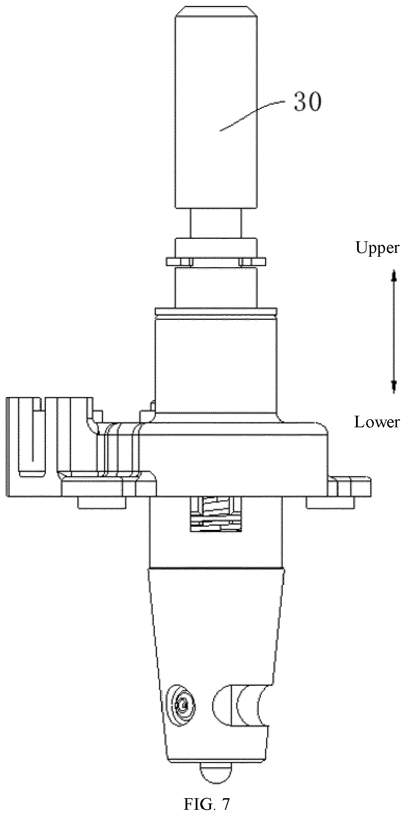

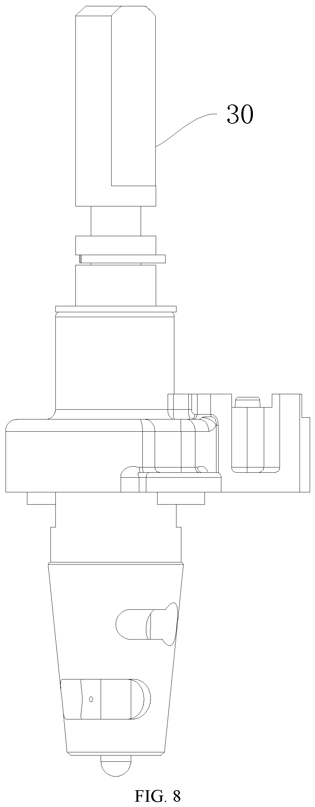

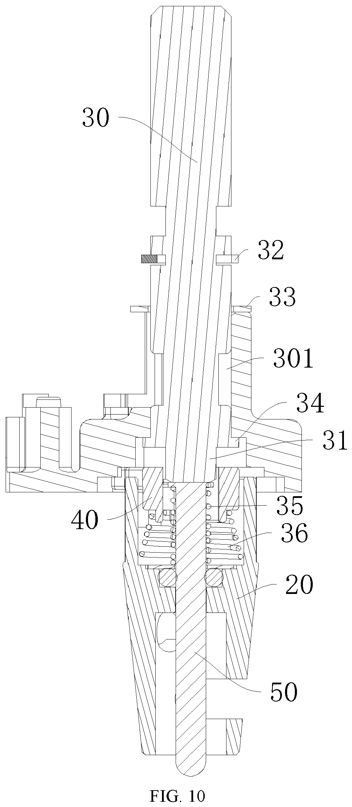

In conjunction with FIGS. 7 to 20, in some embodiments of the present invention, one of an end surface of the valve rod 30 and the positioning block 40 has an embedding block 31 provided thereon, the other one of the end surface of the valve rod 30 and the positioning block 40 has an embedding hole 401 provided thereon. For example, the embedding block 31 is provided on the end surface of the valve rod 30, and the embedding hole 401 is provided on the positioning block 40; or the embedding hole 401 is provided on the end surface of the valve rod 30, and the embedding block 31 is provided on the positioning block 40. The embedding block 31 is movably embedded into the embedding hole 401 along the axial direction in such a manner that the valve rod 30 drives the positioning block 40 to rotate. Through the cooperation of the embedding block 31 and the embedding hole 401, the positioning block 40 can movably fit with the valve rod 30 along the axial direction, and the relative position of the valve rod 30 and the positioning block 40 in the circumferential direction can be fixed. The fixing of the relative position in the present disclosure is to realize the synchronous rotation of the positioning block 40 and the valve rod 30. During actual use, due to assembly accuracy and other reasons, the positioning block 40 and the valve rod 30 may have a certain relative movement in the circumferential direction.

In combination with the above embodiments, the end surface of the valve rod 30 is the above-mentioned abutting structure.

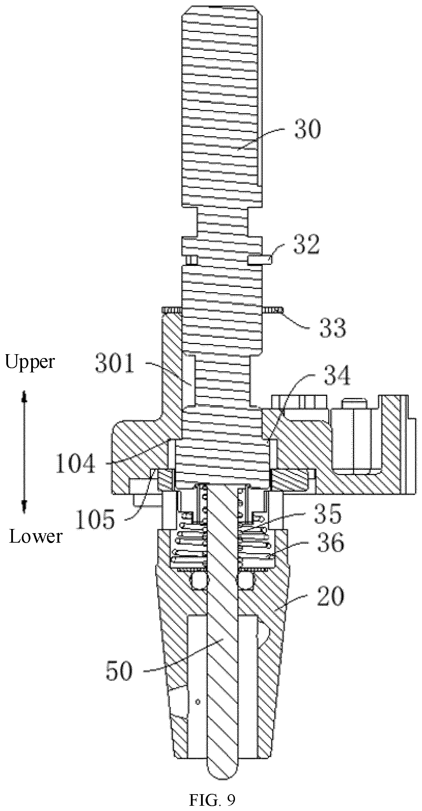

As shown in FIG. 9, in some embodiments of the present invention, the gas valve 100 further includes a valve needle 50, the valve needle 50 extends along the axial direction and has one end adapted to abut against the valve rod 30, and the valve needle 50 is configured to trigger the gas valve gate 70. That is, the motive force of the valve rod 30 is transmitted to the gas valve gate 70 through the valve rod 30, so as to facilitate the driving of the gas valve gate 70, extend the distance between the gas valve gate 70 and the valve rod 30, avoid the interference between the parts, and lower the design and manufacturing costs.

The valve needle 50 and the valve rod 30 in the present invention may be integrally formed or separately formed, and the valve rod 30 and the valve needle 50 may be fixed structures or relatively separable structures.

Optionally, as shown in FIG. 9, the valve needle 50 penetrates through the valve core 20 and the positioning block 40 along the axial direction. After the valve rod 30 drives the valve needle 50 to trigger the gas valve gate 70, the ignition is completed, and the gas valve gate 70 can be kept in a connected state. At this time, the valve needle 50 can be released by releasing the valve rod 30, thereby improving the stability and service life of the gas valve 100.

In addition, based on the structure of the gas valve gate 70, the gas valve gate 70 generally has a certain reset capability. When the valve rod 30 is released and the flame is extinguished, the reset capability of the gas valve gate 70 will be transmitted to the valve rod 30, thereby implementing the reset of the valve rod 30. After the gas valve gate 70 is closed, there will be no gas leakage even if the valve core 20 is opened to the largest degree. Therefore, reset structures for the valve rod 30 and the positioning block 40 may not be provided in the present disclosure. Of course, in order to improve safety, stability and operating feel, etc., a reset structure is provided in the present invention, and the reset of the valve rod 30 and the positioning block 40 is implemented by the reset structure.

As shown in FIG. 9, in some embodiments of the present invention, the gas valve 100 further includes a reset structure, and the reset structure is configured to reset the valve rod 30 to the initial position and reset the positioning block 40 to the locking position. With the reset structure, the valve rod 30 and the positioning block 40 can be quickly reset to facilitate use.

A reset member can be connected to the valve rod 30. The valve rod 30 is pressed down until the ignition is completed, and the valve rod 30 is then driven to be reset. At this time, the positioning block 40 is at the unlocking position, and the gas valve gate 70 is opened to ensure the stable operation of the gas valve 100. That is, after the valve rod 30 drives the positioning block 40 to the unlocking position, the positioning block 40 can remain at the unlocking position within a certain rotation angle range. The reset member can reset the valve rod 30, causing the valve rod 30 to separate from the positioning block 40. In addition, the reset structure can also reset the positioning block 40, so that the positioning block 40 can be reset to the locking position when in a predetermined position.

Optionally, as shown in FIG. 9, the reset structure includes a first spring 35 and a second spring 36, the first spring 35 has two ends abutting against the valve core 20 and the positioning block 40 respectively; and the second spring 36 has two ends abutting against the valve core 20 and the valve rod 30 respectively. The first spring 35 and the second spring 36 are of an inner and outer nested structure. Of course, the first spring 35 and the second spring 36 may alternatively abut against the housing 10 or other positions.

The present invention provides a gas valve 100, which can solve the problem of flameout once the hand is released in the related art. In combination with the above embodiments, the gas valve 100 of the present disclosure includes a valve rod 30, a valve seat 11, a microswitch 14, a valve body 12, a positioning block 40, a valve core 20, a valve needle 50, a first spring 35, a second spring 36, a lever 61, a bottom cover 13, a gas valve gate 70 and other parts. The valve rod 30 has an embedding block 31 provided at a bottom thereof, and the embedding block 31 is embedded in the positioning block 40. The valve seat 11 has a slide groove 102 provided therein. The slide groove 102 has a child lock groove 103 provided at a bottom thereof, and the height of the child lock groove 103 is D. The positioning block 40 has a positioning boss 42 provided on an outer side thereof, the positioning boss 42 and the child lock groove 103 in the valve seat 11 can form a child lock structure, and a gap E is present between an end surface of the valve rod 30 and an end surface of the positioning block 40. A total stroke for unlocking the child lock is B=D+E>C. The second spring 36 is provided under the positioning block 40, and can reset the positioning block 40. The bottom of the valve rod 30 abuts against the valve needle 50, and the first spring 35 is provided under the valve needle 50 and can reset the valve rod 30. The valve needle 50 abuts against the lever 61 under the valve needle 50, the lever 61 has a down-pressing end 62 and a top hook end 63, the top hook end 63 has a through hole, a transmission pin 64 is provided in the through hole, a third spring 65 is provided on the transmission pin 64, another end of the transmission pin 64 has a groove provided thereon, and an opening stop ring is mounted in the groove.

A gas valve gate 70 is provided in the valve body 12, and has a push rod 71 provided on a head portion thereof. The transmission pin 64 abuts against the push rod 71 when in operation. When the valve rod 30 is pressed down, the valve needle 50 moves downward to abut against the down-pressing end 62 of the lever 61, and then the top hook end 63 of the lever 61 pushes the gas valve gate 70 open, so that the gas valve gate 70 is opened. The elastic force of a compression stroke of the third spring 65 at the moment of unlocking the child lock is greater than the spring force of the gas valve gate 70, and the transmission pin 64 can reciprocate along the through hole. Before the positioning block 40 is released from the child lock, it is necessary to ensure that the dynamic and static iron cores of the gas valve gate 70 are absorbed together. The valve rod 30 continues to be pressed down, and the excess total stroke is absorbed by the reset spring in the lever 61 to avoid damaging the gas valve gate 70 by pushing.

In the present invention, the valve rod 30 has a positioning groove provided thereon, and the opening stop ring is received in the positioning groove. When the valve rod 30 is pressed down, the opening stop ring abuts against a flat gasket 33 on an upper end surface of the valve seat 11. In the initial state, the gap is a total stroke for down-pressing the valve rod 30, and with a position limit here, the gas valve gate 70 can be effectively prevented from being hurt by impact.

The valve rod 30 has an annular groove 301 provided in the middle portion thereof, and the annular groove 301 has a microswitch 14 provided on a side surface thereof. The microswitch 14 is mounted on the valve seat 11. When the valve rod 30 is pressed down, the upper end surface of the annular groove 301 acts on a head contact of the micro switch 14, and the microswitch 14 acts and outputs an open-circuit ignition signal (pulse ignition is performed before the gas passage is opened, to avoid gas leakage); the valve rod 30 has a pin provided at the bottom thereof, and when the valve rod 30 is pressed down, the pin escapes from the child lock groove 103 of the valve seat 11 so as to unlock the child lock. The valve rod 30 has a counterbore hole defined at the bottom thereof, and the valve needle 50 is connected in the counterbore hole. When the valve rod 30 is pressed down, the valve needle 50 is pushed to move down. The bottom of the valve needle 50 is connected to the lever 61, the lever 61 is fixed on the bottom cover 13, and the lever 61 has a down-pressing end 62 and a top hook. When the valve needle 50 moves down, the down-pressing end 62 of the lever 61 moves downwards, and the top hook on the other end pushes the gas valve gate 70 open. The gas valve gate 70 has dynamic and static iron cores provided therein. When the dynamic and static iron cores are attached together and when the main coil in the gas valve gate 70 has a valve opening current, the opening of the gas valve gate 70 is completed, and the gas passage is opened.

In addition, in the related art, a part pushing the gas valve gate 70 open is a metal lever 61, and the top hook of the head portion of the lever 61 directly acts on the push rod 71 of the gas valve gate 70, and is of a hardtop structure. Because the top hook of the head portion of the lever 61 directly acts on the push rod 71 of the gas valve gate 70, and the total stroke is stopped at the dynamic and static iron cores of the gas valve gate 70. When the force for down-pressing the valve rod 30 is large, the static iron core will be directly stressed, which will increase the surface roughness of the dynamic and static iron cores, increase the valve opening current, and increase the power consumption. When the force is too large, a dent will be formed on the surface of the dynamic iron core of the gas valve gate 70 to damage the gas valve gate 70, causing that the gas stove cannot be used, and affecting the user experience.

FIGS. 1 to 6 are schematic diagrams of a gas valve 100 according to an embodiment of the present invention. The housing 10 includes a valve body 12, a valve seat 11 and a bottom cover 13, the valve seat 11 covers an upper end of the valve body 12, the bottom cover 13 covers a lower end of the valve body 12, the valve seat 11 has a mounting hole 101 defined therein, the valve rod 30 is rotatably arranged in the mounting hole 101, and the valve rod 30 is movable in an up-down direction and is stopped by the limiting stop ring 32 and the flange 34. The valve rod 30 has an annular groove 301 defined thereon, a microswitch 14 is mounted on the valve seat 11 and faces towards the annular groove 301, and the valve rod 30 will trigger the microswitch 14 when it moves up and down. The valve rod 30 has an embedding block 31 provided on the lower end surface thereof. The embedding block 31 is non-circular in shape. The embedding block 31 is embedded into the positioning block 40 in order to drive the embedding block 31 to rotate. The lower end surface of the valve rod 30 and the positioning block 40 are separated by a predetermined distance, and the lower end surface of the valve rod 30 abuts against the positioning block 40 and drives the positioning block 40 to move downwards during the downward movement of the valve rod 30. The valve rod 30 has a valve needle 50 provided on the lower end thereof, and a first spring 35 and a second spring 36 are provided on an outer periphery of the valve needle 50. The valve needle 50 has a coordination structure provided on an upper end thereof, an upper end of the first spring 35 abuts against the coordination structure, an upper end of the second spring 36 abuts against the positioning block 40, the valve body 12 has a rotatable valve core 20 provided therein, and lower ends of the first spring 35 and the second spring 36 abut against the valve core 20. The valve needle 50 extends in the up-down direction and the lower end of the valve needle 50 abuts against the lever 61.

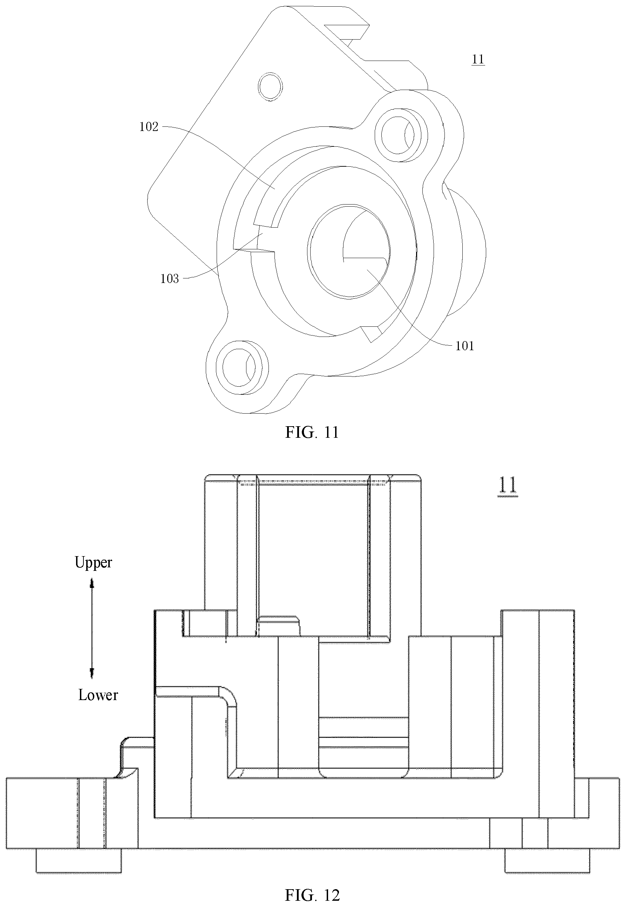

FIGS. 11 to 13 are schematic diagrams of the valve seat 11 of the gas valve 100 according to an embodiment of the present invention. The lower end of the mounting hole 101 has a slide groove 102 provided on an inner peripheral surface thereof, the slide groove 102 is opened downwards, and the slide groove 102 has a child lock groove 103 provided on a bottom surface thereof.

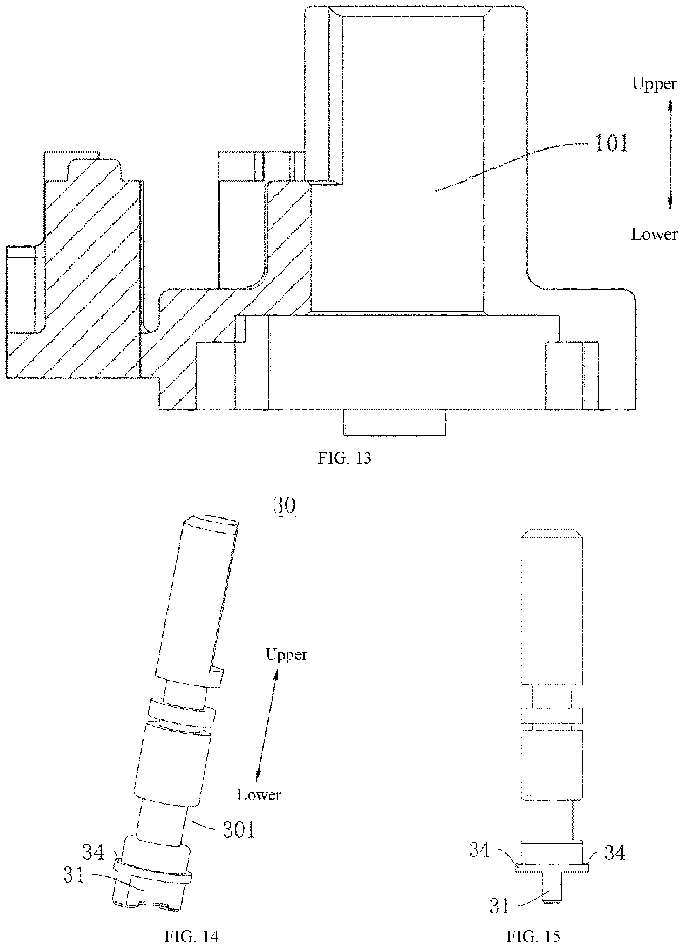

FIGS. 14 to 16 are schematic diagrams of the valve rod 30 of the gas valve 100 according to an embodiment of the present invention. The valve rod 30 extends in the up-down direction, and the valve rod 30 has an annular snap groove and an annular groove 301 in a top-down direction. The annular snap groove is configured to hold the limiting stop ring 32, and the annular groove 301 is configured to fit with the microswitch 14. The lower end surface of the valve rod 30 is configured to abut against the positioning block 40, and the embedding block 31 is connected to the lower end surface of the valve rod 30. The embedding block 31 has a concave structure provided on the lower end surface thereof, the concave structure being configured to accommodate the valve needle 50.

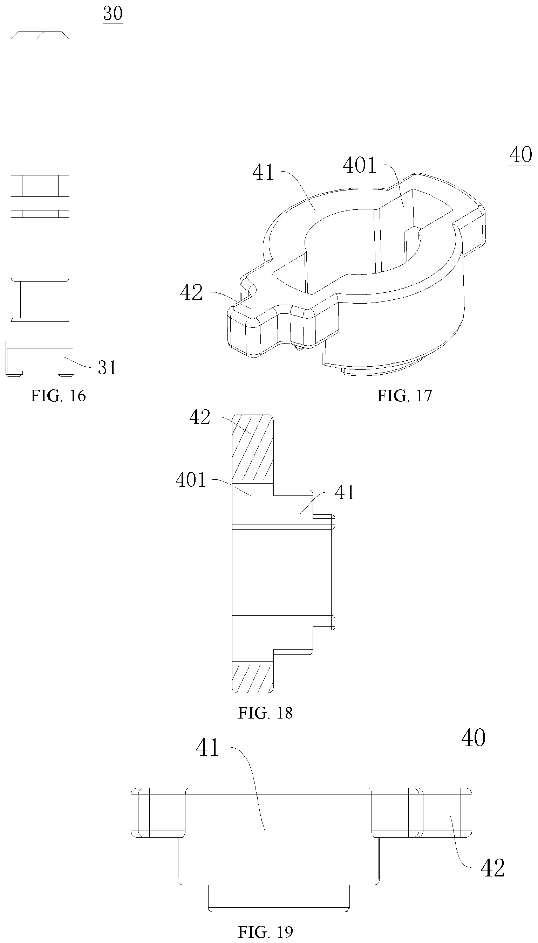

FIGS. 17 to 20 are schematic diagrams of the positioning block 40 of the gas valve 100 according to an embodiment of the present invention. The positioning block 40 includes a main body portion 41 and a positioning boss 42. The main body portion 41 is a hollow structure, and the valve needle 50 is adapted to move up and down through the hollow structure. The lower end of the main body portion 41 has grooves provided on left and right side walls thereof.

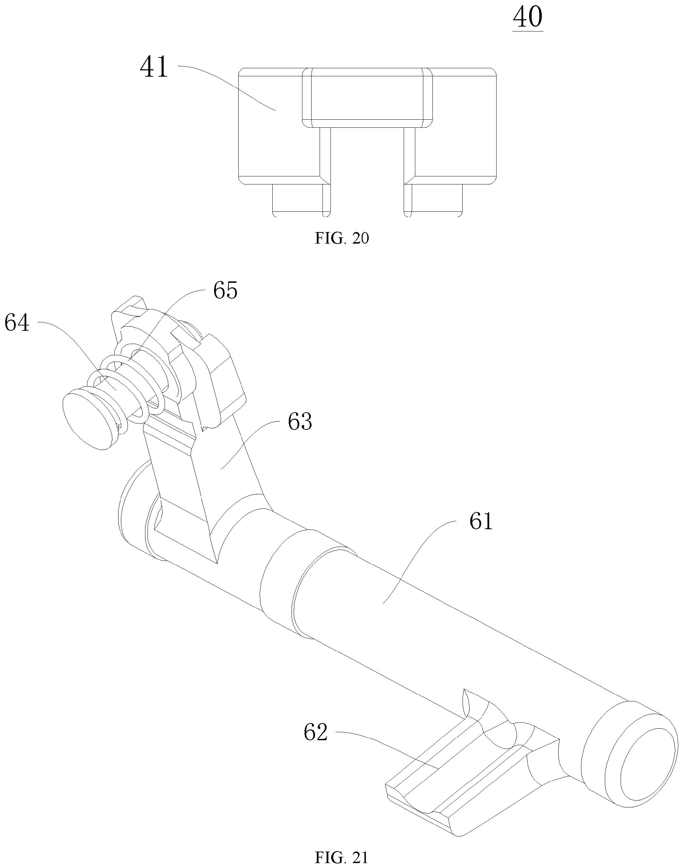

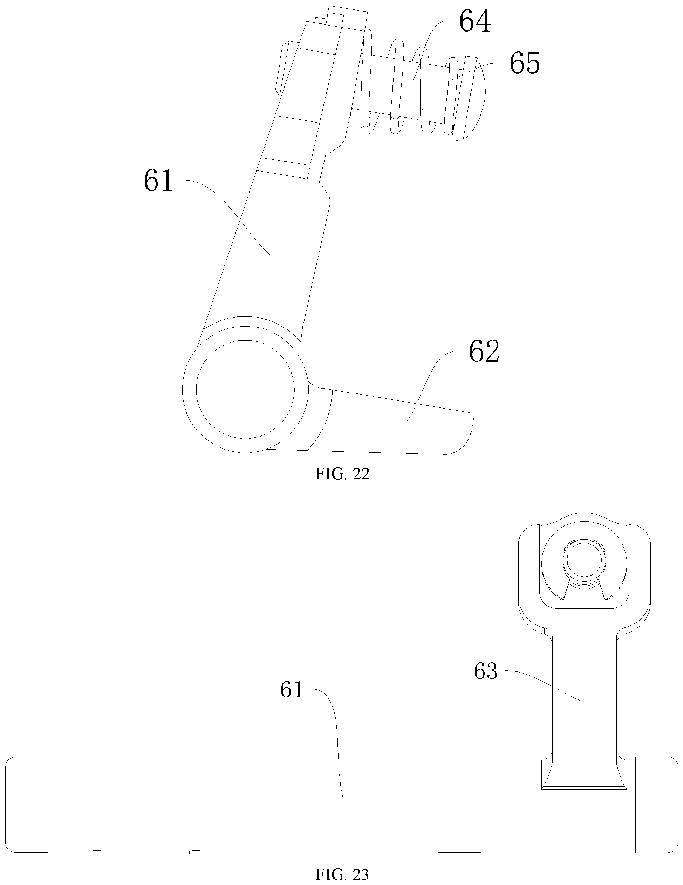

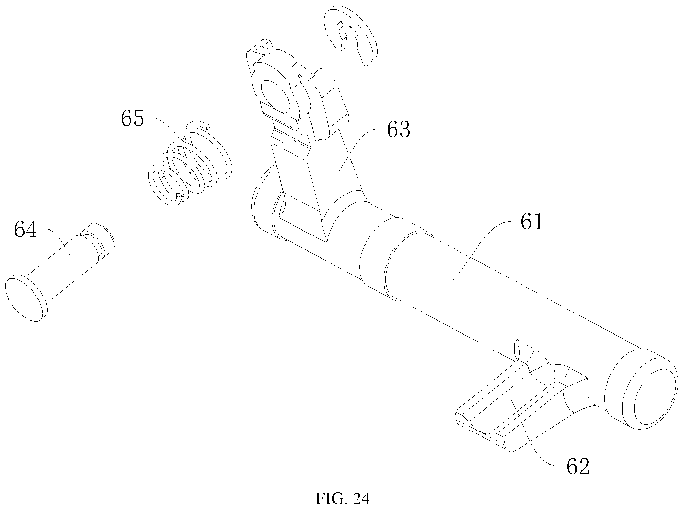

FIGS. 21 to 24 are schematic diagrams of the transmission structure of the gas valve gate 70 of the gas valve 100 according to an embodiment of the present invention. The lever 61 has a down-pressing end 62 and a top hook end 63. The down-pressing end 62 and the top hook end 63 are located at two opposite ends of the lever 61, respectively. The down-pressing end 62 has a guide groove that fits with the valve needle 50. The top hook end 63 has a through hole defined thereon, a third spring 65 is provided between a head portion of one end of the transmission pin 64 and the top hook end 63, and the other end of the transmission pin 64 passes through the through hole and is stopped by the opening stop ring. The transmission pin 64 is configured to trigger the gas valve gate 70.

The present invention also provides a stove including the above gas valve, so that the fire of the stove can be turned on or off and the amount of the fire can be adjusted through the above gas valve.

The gas valve may include a first air supply channel and a second air supply channel, a fire cover may be provided on the stove, and the fire cover may have fire holes corresponding to the first air supply channel and the second air supply channel respectively.

In the description of the present invention, it should be understood that the orientation or position relationship indicated by the term "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", or "circumferential", etc. is based on the orientation or position relationship shown in the drawing, and is only for the convenience for describing the present disclosure and simplifying the description, rather than indicating or implying that the pointed device or element must have a specific orientation, or be constructed or operated in a specific orientation, and therefore cannot be understood as a limitation to the present invention.

In addition, the terms "first" and "second" are only used for descriptive purposes, and cannot be understood as indicating or implying relative importance or implicitly indicating the number of indicated technical features. Therefore, the feature defined with "first" and "second" may explicitly or implicitly include at least one of the features. In the description of the present invention, "plurality" means at least two, such as two, three, etc., unless otherwise specifically defined.

In the present invention, unless otherwise clearly specified and limited, terms such as "mount", "connect", "connected to", "fix" and the like should be understood in a broad sense. For example, it may be fixed connection or detachable connection or integral connection; mechanical connection or electrical connection; direct connection or indirect connection through an intermediate; or internal connection of two components or an interaction relationship between two components, unless otherwise clearly limited. For those of ordinary skill in the art, the specific meaning of the above-mentioned terms in the present invention can be understood according to specific circumstances.

In the present invention, unless expressly stipulated and defined otherwise, a first feature "on" or "under" a second feature may mean that the first feature is in direct contact with the second feature, or the first and second features are in indirect contact with each other through an intermediate. Moreover, the first feature "above" the second feature may mean that the first feature is directly above or obliquely above the second feature, or simply mean that a level of the first feature is higher than a level of the second feature. The first feature "under" the second feature may mean that the first feature is directly under or obliquely under the second feature, or simply mean that the level of the first feature is lower than the level of the second feature.

In the description of the specification, descriptions with reference to the terms "an embodiment", "some embodiments", "an example", "a specific example", or "some examples" mean that a particular feature, structure, material, or characteristic described in connection with the embodiment or example are included in at least one embodiment or example of the present invention. The schematic representations of the above terms throughout this specification are not necessarily referring to the same embodiment or example of the present invention. Furthermore, the described particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present invention have been shown and described above, it should be understood that above embodiments are just illustrative, and cannot be construed as limiting the present disclosure, and for those skilled in the art, changes, modifications, replacements, and variations can be made to the embodiments within the scope of the present invention.

## Claims

1. A gas valve (100), comprising:
a housing (10);
a valve core (20) rotatably arranged in the housing (10) to adjust an opening degree;
a valve rod (30), the valve rod (30) being rotatable along a circumferential direction, and movably connected to the housing (10) along an axial direction, and the valve rod (30) triggering a gas valve gate (70); and
a positioning block (40) arranged in the housing (10) and having a locking position and an unlocking position along the axial direction, wherein the positioning block (40) is locked when at the locking position, and is rotatable and drives the valve core (20) when at the unlocking position, wherein the positioning block (40) and the valve rod (30) are movable relative to each other along the axial direction and are fixed relative to each other along the circumferential direction, the positioning block (40) being driven by the valve rod (30).

2. The gas valve (100) according to claim 1, wherein the valve rod (30) has an initial position, a triggering position, and a rotating position along the axial direction, and the valve rod (30) triggers the gas valve gate (70) when at the triggering position, and drives the positioning block (40) to move to the unlocking position when at the rotating position, a stroke C of the valve rod (30) moving from the initial position to the triggering position being shorter than or equal to a stroke B of the valve rod (30) moving to the rotating position.

3. The gas valve (100) according to claim 2, wherein the valve rod (30) has an abutting structure drives the positioning block (40), wherein when the valve rod (30) is at the initial position, a gap E is between the abutting structure and the positioning block (40), the stroke B of the valve rod (30) being equal to a sum of the gap E and an unlocking stroke D of the positioning block (40), the unlocking stroke D of the positioning block (40) being a stroke of the positioning block (40) moving from the locking position to the unlocking position.

4. The gas valve (100) according to claim 2 or 3, further comprising:
an ignition switch connected to the housing (10), wherein the valve rod (30) triggers the ignition switch within the stroke B.

5. The gas valve (100) according to claim 4, wherein an annular groove (301) is provided on a peripheral surface of the valve rod (30), and wherein the ignition switch has a triggering portion extending into the annular groove (301) and is triggered by an end surface of the annular groove (301).

6. The gas valve (100) according to any one of claims 1 to 5, where the housing (10) comprises:
a valve seat (11) provided with a mounting hole (101), wherein a slide groove (102) is provided on an inner peripheral surface of an end of the mounting hole (101), a child lock groove (103) is provided on a bottom surface of the slide groove (102),
wherein the valve rod (30) is inserted in the mounting hole (101), wherein the positioning block (40) comprises a main body and a positioning boss (42) connected to the main body, the positioning boss (42) being embedded in the child lock groove (103) when the positioning block (40) is at the locking position, and the positioning boss (42) sliding along the slide groove (102) when the positioning block (40) is at the unlocking position.

7. The gas valve (100) according to claim 6, wherein the mounting hole (101) comprises a first hole section, a second hole section having a greater radial dimension than the first hole section, and a third hole section having a greater radial dimension than the second hole section, a first stepped surface (104) is provided between the first hole section and the second hole section, and a second stepped surface (105) is provided between the second hole section and the third hole section,
wherein an end of the valve rod (30) has a flange (34) and is stopped by the first stepped surface (104), and wherein the positioning block (40) is movably arranged on the third hole section along the axial direction and is stopped by the second stepped surface (105).

8. The gas valve (100) according to claim 6 or 7, wherein an end portion of the valve rod (30) extends out of the mounting hole (101), and has a limiting stop ring (32) limiting an axial stroke of the valve rod (30).

9. The gas valve (100) according to any one of claims 1 to 8, wherein either an end surface of the valve rod (30) or the positioning block (40) is provided with an embedding block (31), and the other one of the end surface of the valve rod (30) and the positioning block (40) is provided with an embedding hole (401), the embedding block (31) being movably embedded into the embedding hole (401) along the axial direction such that the valve rod (30) drives the positioning block (40) to rotate.

10. The gas valve (100) according to any one of claims 1 to 9, further comprising:
a valve needle (50) extending along the axial direction and having an end abuts against the valve rod (30), wherein the valve needle (50) triggers the gas valve gate (70).

11. The gas valve (100) according to claim 10, wherein the valve needle (50) penetrates through the valve core (20) and the positioning block (40) along the axial direction.

12. The gas valve (100) according to any one of claims 1 to 11, further comprising:
a reset structure resets the valve rod (30) to the initial position and reset the positioning block (40) to the locking position.

13. The gas valve (100) according to claim 12, wherein the reset structure comprises:
a first spring (35) having two ends abutting against the valve core (20) and the positioning block (40) respectively; and
a second spring (36) having two ends abutting against the valve core (20) and the valve rod (30) respectively,
wherein the first spring (35) and the second spring (36) are of an inner and outer nested structure.

14. A stove, comprising a gas valve (100) according to any one of claims 1 to 13.

## Patentansprüche

1. Gasventil (100), umfassend:
ein Gehäuse (10);
einen Ventileinsatz (20), der drehbar im Gehäuse (10) angeordnet ist, um einen Öffnungsgrad einzustellen;
eine Ventilstange (30), wobei die Ventilstange (30) entlang einer Umfangsrichtung drehbar ist und entlang einer axialen Richtung beweglich mit dem Gehäuse (10) verbunden ist, und die Ventilstange (30) einen Gasventilschieber (70) auslöst; und
einen Positionierungsblock (40), der in dem Gehäuse (10) angeordnet ist und eine Verriegelungsposition und eine Entriegelungsposition entlang der axialen Richtung aufweist, wobei der Positionierungsblock (40) verriegelt ist, wenn er sich in der Verriegelungsposition befindet, und drehbar ist und den Ventileinsatz (20) antreibt, wenn er sich in der Entriegelungsposition befindet, wobei der Positionierungsblock (40) und die Ventilstange (30) relativ zueinander entlang der axialen Richtung beweglich sind und relativ zueinander entlang der Umfangsrichtung fixiert sind, wobei der Positionierungsblock (40) von der Ventilstange (30) angetrieben wird.

2. Gasventil (100) gemäß Anspruch 1, wobei die Ventilstange (30) eine Ausgangsposition, eine Auslöseposition und eine Drehposition entlang der axialen Richtung aufweist und die Ventilstange (30) den Gasventilschieber (70) auslöst, wenn sie sich in der Auslöseposition befindet, und den Positionierungsblock (40) antreibt, sich in die Entriegelungsposition zu bewegen, wenn sie sich in der Drehposition befindet, wobei ein Hub C der Ventilstange (30), die sich von der Ausgangsposition in die Auslöseposition bewegt, kürzer als oder gleich einem Hub B der Ventilstange (30) ist, die sich in die Drehposition bewegt.

3. Gasventil (100) gemäß Anspruch 2, wobei die Ventilstange (30) eine Anschlagstruktur aufweist, die den Positionierungsblock (40) antreibt, wobei, wenn sich die Ventilstange (30) in der Ausgangsposition befindet, ein Spalt E zwischen der Anschlagstruktur und dem Positionierungsblock (40) besteht, der Hub B der Ventilstange (30) gleich einer Summe aus dem Spalt E und einem Entriegelungshub D des Positionierungsblocks (40) ist, wobei der Entriegelungshub D des Positionierungsblocks (40) ein Hub des Positionierungsblocks (40) ist, der sich von der Verriegelungsposition in die Entriegelungsposition bewegt.

4. Gasventil (100) gemäß Anspruch 2 oder 3, ferner umfassend:
einen mit dem Gehäuse (10) verbundenen Zündschalter, wobei die Ventilstange (30) den Zündschalter innerhalb des Hubes B auslöst.

5. Gasventil (100) gemäß Anspruch 4, wobei eine ringförmige Nut (301) an einer Umfangsfläche der Ventilstange (30) vorgesehen ist, und wobei der Zündschalter einen Auslösebereich aufweist, der sich in die ringförmige Nut (301) erstreckt und durch eine Endfläche der ringförmigen Nut (301) ausgelöst wird.

6. Gasventil (100) gemäß einem der Ansprüche 1 bis 5, wobei das Gehäuse (10) Folgendes umfasst:
einen Ventilsitz (11), der mit einem Montageloch (101) versehen ist, wobei eine Gleitnut (102) an einer inneren Umfangsfläche eines Endes des Montagelochs (101) vorgesehen ist, eine Kindersicherungsnut (103) an einer Bodenfläche der Gleitnut (102) vorgesehen ist,
wobei die Ventilstange (30) in das Montageloch (101) eingeführt ist, wobei der Positionierungsblock (40) einen Hauptkörper und einen mit dem Hauptkörper verbundenen Positionierungsvorsprung (42) umfasst, wobei der Positionierungsvorsprung (42) in der Kindersicherungsnut (103) eingebettet ist, wenn sich der Positionierungsblock (40) in der Verriegelungsposition befindet, und der Positionierungsvorsprung (42) entlang der Gleitnut (102) gleitet, wenn sich der Positionierungsblock (40) in der Entriegelungsposition befindet.

7. Gasventil (100) gemäß Anspruch 6, wobei das Montageloch (101) einen ersten Lochabschnitt, einen zweiten Lochabschnitt, der eine größere radiale Abmessung als der erste Lochabschnitt aufweist, und einen dritten Lochabschnitt, der eine größere radiale Abmessung als der zweite Lochabschnitt aufweist, umfasst, eine erste abgestufte Fläche (104) zwischen dem ersten Lochabschnitt und dem zweiten Lochabschnitt vorgesehen ist und eine zweite abgestufte Fläche (105) zwischen dem zweiten Lochabschnitt und dem dritten Lochabschnitt vorgesehen ist,
wobei ein Ende der Ventilstange (30) einen Flansch (34) aufweist und durch die erste abgestufte Fläche (104) gestoppt wird, und wobei der Positionierungsblock (40) auf dem dritten Lochabschnitt entlang der axialen Richtung beweglich angeordnet ist und durch die zweite abgestufte Fläche (105) gestoppt wird.

8. Gasventil (100) gemäß Anspruch 6 oder 7, wobei ein Endbereich der Ventilstange (30) aus dem Montageloch (101) herausragt und einen Begrenzungsanschlagring (32) aufweist, der einen axialen Hub der Ventilstange (30) begrenzt.

9. Gasventil (100) gemäß einem der Ansprüche 1 bis 8, wobei entweder eine Endfläche der Ventilstange (30) oder des Positionierungsblocks (40) mit einem Einbettungsblock (31) versehen ist und das andere der Endfläche der Ventilstange (30) und des Positionierungsblocks (40) mit einem Einbettungsloch (401) versehen ist, wobei der Einbettungsblock (31) in das Einbettungsloch (401) entlang der axialen Richtung beweglich eingebettet ist, so dass die Ventilstange (30) den Positionierungsblock (40) antreibt, sich zu drehen.

10. Gasventil (100) gemäß einem der Ansprüche 1 bis 9, ferner umfassend:
eine Ventilnadel (50), die sich entlang der axialen Richtung erstreckt und ein Ende aufweist, das an der Ventilstange (30) anliegt, wobei die Ventilnadel (50) den Gasventilschieber (70) auslöst.

11. Gasventil (100) gemäß Anspruch 10, wobei die Ventilnadel (50) den Ventileinsatz (20) und den Positionierungsblock (40) in axialer Richtung durchstößt.

12. Gasventil (100) gemäß einem der Ansprüche 1 bis 11, ferner umfassend:
eine Rückstellstruktur, die die Ventilstange (30) in die Ausgangsposition zurückstellt und den Positionierungsblock (40) in die Verriegelungsposition zurückstellt.

13. Gasventil (100) gemäß Anspruch 12, wobei die Rückstellstruktur Folgendes umfasst:
eine erste Feder (35) aufweisend zwei Enden, die am Ventileinsatz (20) bzw. am Positionierungsblock (40) anliegen; und
eine zweite Feder (36) aufweisend zwei Enden, die an dem Ventileinsatz (20) bzw. der Ventilstange (30) anliegen,
wobei die erste Feder (35) und die zweite Feder (36) eine innere und äußere verschachtelte Struktur aufweisen.

14. Herd, umfassend ein Gasventil (100) gemäß einem der Ansprüche 1 bis 13.

## Revendications

1. Vanne à gaz (100), comprenant
un boîtier (10) ;
un noyau de vanne (20) disposé de manière rotative dans le boîtier (10) pour ajuster un degré d'ouverture ;
une tige de vanne (30), la tige de vanne (30) étant rotative le long d'une direction circonférentielle, et reliée de manière mobile au boîtier (10) le long d'une direction axiale, et la tige de vanne (30) déclenchant un obturateur de la vanne à gaz (70) ; et
un bloc de positionnement (40) disposé dans le boîtier (10) et ayant une position de verrouillage et une position de déverrouillage le long de la direction axiale, dans lequel le bloc de positionnement (40) est verrouillé lorsqu'il est en position de verrouillage, et est rotatif et entraîne le noyau de vanne (20) lorsqu'il est en position de déverrouillage, dans lequel le bloc de positionnement (40) et la tige de vanne (30) sont mobiles l'un par rapport à l'autre le long de la direction axiale et sont fixes l'un par rapport à l'autre le long de la direction circonférentielle, le bloc de positionnement (40) étant entraîné par la tige de vanne (30).

2. La vanne à gaz (100) selon la revendication 1, dans laquelle la tige de vanne (30) a une position initiale, une position de déclenchement et une position de rotation le long de la direction axiale, et la tige de vanne (30) déclenche l'obturateur de la vanne à gaz (70) lorsqu'elle est en position de déclenchement, et entraîne le bloc de positionnement (40) à se déplacer vers la position de déverrouillage lorsqu'elle est en position de rotation, une course C de la tige de vanne (30) passant de la position initiale à la position de déclenchement étant plus courte ou égale à une course B de la tige de vanne (30) se déplaçant vers la position de rotation.

3. La vanne à gaz (100) selon la revendication 2, dans laquelle la tige de vanne (30) a une structure de butée qui entraîne le bloc de positionnement (40), dans laquelle lorsque la tige de vanne (30) est en position initiale, un espace E se trouve entre la structure de butée et le bloc de positionnement (40), la course B de la tige de vanne (30) est égale à la somme de l'espace E et d'une course de déverrouillage D du bloc de positionnement (40), la course de déverrouillage D du bloc de positionnement (40) étant une course du bloc de positionnement (40) passant de la position de verrouillage à la position de déverrouillage.

4. La vanne à gaz (100) selon la revendication 2 ou 3, comprenant en outre :
un interrupteur d'allumage connecté au boîtier (10), dans lequel la tige de vanne (30) déclenche l'interrupteur d'allumage dans la course B.

5. La vanne à gaz (100) selon la revendication 4, dans laquelle une rainure annulaire (301) est prévue sur une surface périphérique de la tige de vanne (30), et dans laquelle le commutateur d'allumage a une partie de déclenchement s'étendant dans la rainure annulaire (301) et est déclenché par une surface d'extrémité de la rainure annulaire (301).

6. La vanne à gaz (100) selon l'une des revendications 1 à 5, où le boîtier (10) comprend :
un siège de vanne (11) pourvu d'un trou de montage (101), dans lequel une rainure de glissement (102) est prévue sur une surface périphérique intérieure d'une extrémité du trou de montage (101), une rainure de sécurité enfant (103) est prévue sur une surface inférieure de la rainure de glissement (102),
dans lequel la tige de vanne (30) est insérée dans le trou de montage (101), le bloc de positionnement (40) comprend un corps principal et un bossage de positionnement (42) relié au corps principal, le bossage de positionnement (42) étant encastré dans la rainure de sécurité enfant (103) lorsque le bloc de positionnement (40) est en position de verrouillage, et le bossage de positionnement (42) glissant le long de la rainure de glissement (102) lorsque le bloc de positionnement (40) est en position de déverrouillage.

7. La vanne à gaz (100) selon la revendication 6, dans laquelle le trou de montage (101) comprend une première section de trou, une deuxième section de trou ayant une dimension radiale plus grande que la première section de trou, et une troisième section de trou ayant une dimension radiale plus grande que la deuxième section de trou, une première surface en escalier (104) est prévue entre la première section de trou et la deuxième section de trou, et une deuxième surface en escalier (105) est prévue entre la deuxième section de trou et la troisième section de trou,
dans lequel une extrémité de la tige de vanne (30) comporte une bride (34) et est arrêtée par la première surface en escalier (104), et dans lequel le bloc de positionnement (40) est disposé de manière mobile sur la troisième section de trou le long de la direction axiale et est arrêté par la deuxième surface en escalier (105).

8. La vanne à gaz (100) selon la revendication 6 ou 7, dans laquelle une partie terminale de la tige de vanne (30) s'étend hors du trou de montage (101) et comporte un anneau de butée (32) limitant une course axiale de la tige de vanne (30).

9. La vanne à gaz (100) selon l'une des revendications 1 à 8, dans laquelle une surface d'extrémité de la tige de vanne (30) ou du bloc de positionnement (40) est pourvue d'un bloc d'encastrement (31), et l'autre surface d'extrémité de la tige de vanne (30) et du bloc de positionnement (40) est pourvue d'un trou d'encastrement (401), le bloc d'encastrement (31) étant encastré de manière mobile dans le trou d'encastrement (401) le long de la direction axiale de telle sorte que la tige de vanne (30) entraîne le bloc de positionnement (40) en rotation.

10. La vanne à gaz (100) selon l'une des revendications 1 à 9, comprenant en outre :
une aiguille de vanne (50) s'étendant le long de la direction axiale et ayant une extrémité en butée contre la tige de vanne (30), dans laquelle l'aiguille de vanne (50) déclenche l'obturateur de la vanne à gaz (70).

11. La vanne à gaz (100) selon la revendication 10, dans laquelle l'aiguille de vanne (50) pénètre à travers le noyau de vanne (20) et le bloc de positionnement (40) le long de la direction axiale.

12. La vanne à gaz (100) selon l'une des revendications 1 à 11, comprenant en outre :
une structure de réinitialisation qui réinitialise la tige de vanne (30) à la position initiale et réinitialise le bloc de positionnement (40) à la position de verrouillage.

13. La vanne à gaz (100) selon la revendication 12, dans lequel la structure de réinitialisation comprend :
un premier ressort (35) dont les deux extrémités viennent en butée contre le noyaude la vanne (20) et le bloc de positionnement (40) respectivement ; et
un second ressort (36) dont les deux extrémités viennent en butée contre le noyau de la vanne (20) et la tige de la vanne (30) respectivement,
dans lequel le premier ressort (35) et le second ressort (36) ont une structure emboîtée intérieure et extérieure.

14. Cuisinière comprenant une vanne à gaz (100) selon l'une quelconque des revendications 1 à 13.
